# EUROPÄISCHE PATENTSCHRIFT

(11) **EP 0 752 365 B1**
(45) Veröffentlichungstag und Bekanntmachung des Hinweises auf die Patenterteilung: **08.03.2000**
(21) Anmeldenummer: 96109228.5
(22) Anmeldetag: 08.06.1996
(51) Int. Cl.: B63G 8/12, F04C 11/00, F04D 13/04, F01N 7/12, F01N 3/04

(54) **Vorrichtung für CO2-Entsorgung von Unterwasserfahrzeugen**
Device for the disposal of CO2 from submarines
Dispositif pour l'élimination de CO2 des sous-marins

(30) Priorität: 04.07.1995 DE 19524248
(43) Veröffentlichungstag der Anmeldung: 08.01.1997
(73) Patentinhaber: HOWALDTSWERKE-DEUTSCHE WERFT AG, 24143 Kiel (DE)
(72) Erfinder: Fiebig, Helmut, 24226 Heikendorf (DE); Fiebig, Jan, 24226 Heikendorf (DE)
(74) Vertreter: Köckeritz, Günter

(56) Entgegenhaltungen:
- US-A- 2 836 123
- US-A- 2 840 991
- US-A- 3 690 040
- US-A- 4 973 408
- SCHIFF & HAFEN/SEEWIRTSCHAFT, Bd. 44, Nr. 7, Juli 1992, HAMBURG, Seiten 43-46, XP000287420 U.REGENSDORF: "Der Kreislaufdiesel als aussenunabhängiger Antrieb für Uboote"

## Beschreibung

Die Erfindung betrifft eine Vorrichtung für die CO₂-Entsorgung von Unterwasserfahrzeugen.

Zur CO₂-Entsorgung von Unterwasserfahrzeugen soll Druckwasser von außenbord in das Unterwasserfahrzeug genommen werden, um dort mit einem Absorber CO₂ zu lösen und anschließend soll dieses Wasser, mit dem gelösten CO₂ gegen den Tauchdruck wieder nach außen abgegeben werden.

In Schiff & Hafen/Seewirtschaft, Heft 7/1992, S.43-46 wird im Beitrag "Der Kreislaufdiesel als außenluftunabhängiger Antrieb für Uboote" ein Water - Management- System beschrieben, das geeignet ist, Seewasser für die Absorber aufzunehmen und wieder nach außen abzugeben. Dieses Water - Management - System arbeitet durch Nutzung der Energie des unter Tauchdruck stehenden Seewassers. Die Anordnung besteht aus Steuerventilen und freibeweglichen Kolben, die einen tauchtiefenunabhängigen Betrieb des Kreislaufdieselsystems ermöglichen. Die Förderpumpen für den Seewassereintritt brauchen nur die Rohrleitungswiderstände und Armaturwiderstände zu kompensieren.

Der Erfindung liegt die Aufgabe zugrunde, eine Vorrichtung zu finden, durch die das Hineinführen und Herausführen des Wassers mit wenig Aufwand bei minimierten Verlusten ermöglicht ist.

Zur Aufgabenlösung ist eine Vorrichtung vorgesehen, die ein Gehäuse mit einer kreisförmigen Innenlauffläche für einen rotierenden Kurvenkörper aufweist, wobei die Innenlauffläche unterbrochen ist durch sich gegenüberliegende Wassereintritts- und Wasseraustrittsöffnungspaare, bei denen jede Wassereintrittsöffnung von der Wasseraustrittsöffnung durch einen auf dem Kurvenkörper radial verschiebbar geführten Schieber getrennt ist und von denen an der kreisförmigen Innenlauffläche des Gehäuses jeweils eine Wasserhochdruckeintrittsöffnung im Wechsel mit einer Wasserniederdruckaustrittsöffnung und einer Wasserniederdruckeintrittsöffnung im Wechsel mit einer Wasserhochdruckaustrittsöffnung angeordnet ist.

Die erfindungsgemäße Vorrichtung zeichnet sich dadurch aus, daß sie nur wenig bewegte Teile und Dichtflächen aufweist und daß sie mit geringem inneren Strömungswiderstand, ohne Strömungsumkehr ein harmonisches, die wasserführenden Vorrichtungsteile somit schonendes und nur gering beanspruchendes Fließen des für die CO₂-Entsorgung transportierten Wassers ermöglicht.

Eine besonders günstige Ausführungsform besteht darin, daß die Vorrichtung vier Wassereintritts- und Wasseraustrittsöffnungspaare aufweist, von denen zwei sich gegenüberliegende Paare in Verbindung mit dem Wasserhochdruckbereich und zwei weitere sich gegenüberliegende Paare in Verbindung mit dem Wasserniederdruckbereich stehen.

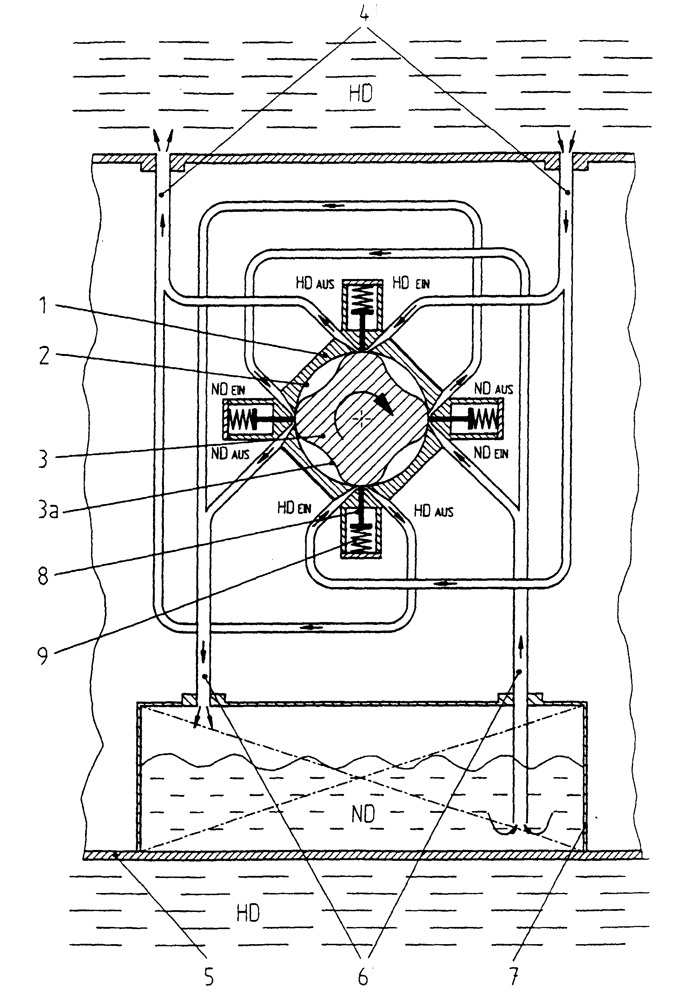

Im folgenden wird anhand der Zeichnung ein Ausführungsbeispiel der Erfindung beschrieben.

Mit 1 ist ein Gehäuse bezeichnet, mit einer kreisförmigen Innenlauffläche 2, für einen rotierenden Kurvenkörper 3, der von einem nicht näher dargestellten Antrieb in Drehbewegung bringbar ist. Die Innenlauffläche 2 ist unterbrochen durch vier Wassereintritts- und Wasseraustrittsöffnungspaare, von denen sich zwei gegenüberliegende Paare über entsprechende Leitungen 4 in Verbindung stehen, mit dem außerhalb eines Unterwasserfahrzeuges 5 befindlichen Wasserhochdruckbereich HD und zwei weitere sich gegenüberliegende Paare über entsprechende Leitungen 6 in Verbindung stehen, mit einem Wasserniederdruckbereich ND, der durch einen im Unterwasserfahrzeug 5 befindlichen, als CO₂-Absorber betriebenen Wasserbehälter 7 vorhanden ist. Bei den Wassereintritts- und Wasseraustrittsöffnungspaaren ist jede Wassereintrittsöffnung von der Wasseraustrittsöffnung durch einen Schieber 8 getrennt. Jeder Schieber 8 ist durch ein Federelement 9 druckbelastet und auf dem Kurvenkörper 3 radial verschiebbar geführt. Von den Wassereintritts- und Wasseraustrittsöffnungspaaren ist an der Innenfläche 2 jeweils eine Wasserhochdruckeintrittsöffnung HD ein im Wechsel mit einer Wasserniederdruckaustrittsöffnung ND aus und eine Wasserniederdruckeintrittsöffnung ND ein im Wechsel mit einer Wasserhochdruckaustrittsöffnung HD aus angeordnet.

Bei Rotation des Kurvenkörpers 3 in Pfeilrichtung folgen die federdruckbeaufschlagten Schieber 8 der Kontur des Kurvenkörpers und teilen die Ausbuchtungen 3a des Kurvenkörpers auf in einen sich vergrößernden Kammerbereich, der über die Wassereintrittsöffnungen mit neuem Volumen aufgefüllt wird und in einen sich verkleinernden Kammerbereich, der über die Wasseraustrittsöffnungen sein vorhandenes Volumen abgibt. Aufgrund der wechselnden Anordnung von Wasserhochdruckeintrittsöffnungen und Wasserniederdruckaustrittsöffnungen beziehungsweise Wasserniederdruckeintrittsöffnungen und Wasserhochdruckaustrittsöffnungen wird Wasser des Hochdruckbereiches in den Niederdruckbereich und gleichzeitig Wasser des Niederdruckbereiches in den Hochdruckbereich gefördert.

## Patentansprüche

1. Vorrichtung für die CO₂-Entsorgung von Unterwasserfahrzeugen, die in wasserführender Verbindung steht mit dem außerhalb des Fahrzeuges vorhandenen Wasserhochdruckbereich und einem innerhalb des Fahrzeuges vorhandenen Wasserniederdruckbereich, bestehend aus einem Gehäuse (1) mit einer kreisförmigen Innenlauffläche (2) für einen rotierenden Kurvenkörper (3), wobei die Innenlauffläche (2) unterbrochen ist durch sich gegenüberliegende Wassereintritts- und Wasseraustrittsöffnungspaare, bei denen jede Wassereintrittsöffnung von der Wasseraustrittsöffnung durch einen auf dem Kurvenkörper (3) radial verschiebbar geführten Schieber (8) getrennt ist, dadurch gekennzeichnet, daß an der kreisförmigen Innenlauffläche (2) des Gehäuses (1) jeweils eine Wasserhochdruckeintrittsöffnung (HD ein) im Wechsel mit einer Wasserniederdruckaustrittsöffnung (ND aus) und eine Wasserniederdruckeintrittsöffnung (ND ein) im Wechsel mit einer Wasserhochdruckaustrittsöffnung (HD aus) angeordnet ist, bis vier Wassereintritts- und Wasseraustrittsöffnungspaare angeordnet sind, von denen zwei sich gegenüberliegende Paare in Verbindung mit dem Wasserhochdruckbereich (HD) und zwei weitere sich gegenüberliegende Paare in Verbindung mit dem Wasserniederdruckbereich (ND) stehen.

## Claims

1. Apparatus for the removal of CO₂ from underwater vessels, which apparatus communicates in a water-conducting manner with the high-pressure water region, which exists outside the vessel, and a low-pressure water region, which exists within the vessel, said apparatus comprising a housing (1) having a cylindrical inner bearing face (2) for a rotatable cam body (3), the inner bearing face (2) being interrupted by oppositely situated pairs of water inlet and water outlet openings, wherein each water inlet opening is separated from the water outlet opening by a slide member (8), which is radially displaceably guided on the cam body (3), characterised in that, in each case, a high-pressure water inlet opening (HP in) is disposed in the cylindrical inner bearing face (2) of the housing (1) so as to alternate with a low-pressure water outlet opening (LP out), and a low-pressure water inlet opening (LP in) is disposed therein so as to alternate with a high-pressure water outlet opening (HP out), up to four pairs of water inlet and water outlet openings being provided, of which two oppositely situated pairs communicate with the high-pressure water region (HP), and two additional oppositely situated pairs communicate with the low-pressure water region (LP).

## Revendications

1. Dispositif pour l'élimination du CO₂ des véhicules submersibles, qui communique pour acheminer l'eau avec la zone d'eau haute pression présente à l'extérieur du véhicule et une zone d'eau basse pression présente à l'intérieur du véhicule, comprenant une enveloppe (1) avec une surface de roulement intérieure (2) circulaire pour un corps de came (3) rotatif, la surface de roulement intérieure (2) étant interrompue par des paires d'ouvertures d'entrée et de sortie d'eau situées à l'opposé les unes des autres, dans lesquelles chaque ouverture d'entrée d'eau est séparée de l'ouverture de sortie d'eau par un curseur (8) guidé de manière à pouvoir être déplacé radialement sur le corps de came (3), caractérisé en ce que sur la surface de roulement intérieure (2) circulaire de l'enveloppe (1) à chaque fois une ouverture d'entrée d'eau haute pression (HP entrée) est disposée en alternance avec une ouverture de sortie d'eau basse pression (BP sortie) et une ouverture d'entrée d'eau basse pression (BP entrée) en alternance avec une ouverture de sortie d'eau haute pression (HP sortie), jusqu'à ce que quatre paires d'ouvertures d'entrée et de sortie d'eau soient disposées, dont deux paires situées à l'opposé l'une de l'autre communiquent avec la zone d'eau haute pression (HP) et deux autres paires situées à l'opposé l'une de l'autre communiquent avec la zone d'eau basse pression (BP).
